# EUROPÄISCHE PATENTSCHRIFT

(11) **EP 0 908 630 B1**
(45) Veröffentlichungstag und Bekanntmachung des Hinweises auf die Patenterteilung: **23.04.2003**
(21) Anmeldenummer: 98114778.8
(22) Anmeldetag: 06.08.1998
(51) Int. Cl.: F04D 25/06, H02K 29/03, H02K 29/12, H02K 5/167, H02K 5/22

(54) **Kleinlüftereinheit, insbesondere zur Verwendung als Leiterplattenlüfter**
A small fan unit, especially used as circuit board fan
Petit appareil ventilateur spécialement utilisé comme ventilateur de circuit imprimé

(30) Priorität: 11.10.1997 DE 29718082 U
(43) Veröffentlichungstag der Anmeldung: 14.04.1999
(73) Patentinhaber: PAPST-MOTOREN GmbH & Co. KG, 78106 St Georgen (DE)
(72) Erfinder: Fehrenbacher, Wolfgang, 78112 St. Georgen (DE); Moini, Mojtaba, Dipl.-Ing., 72074 Tübingen (DE); Schmider, Fritz, 78132 Hornberg (DE)

(56) Entgegenhaltungen:
- EP-A- 0 299 512
- DE-C- 3 821 557
- DE-U- 9 100 952
- DE-U- 29 501 695
- FR-A- 2 533 085
- US-A- 5 591 017
- PATENT ABSTRACTS OF JAPAN vol. 096, no. 012, 26. Dezember 1996 & JP 08 214524 A (NIPPON DENSAN CORP), 20. August 1996

## Beschreibung

Die vorliegende Erfindung betrifft eine Kleinlüftereinheit mit einem Lüfterrad und einem zum Antrieb dieses Lüfterrads dienenden, kollektorlosen Gleichstrommotor, welcher einen Permanentmagnet-Rotor und ein Statorteil mit einem Klauenpolstator aufweist.

Aus dem DE-U-295 01 695.7 ist eine Lüftereinheit bekannt. Dabei ist der Antriebsmotor als Scheibenläufermotor mit einem ringscheibenförmigen Permanentmagnet-Rotor ausgebildet. Der Rotor ist axial zum Stator versetzt und parallel zu diesem angeordnet, so dass zwischen dem Permanentmagnet-Rotor und einer Stator-Ringspule ein ebener Luftspalt gebildet ist. Der Stator weist eine kreisringförmige, ferromagnetische Blechscheibe als magnetisches Rückschlusselement für den Rotormagneten auf. Eine weitere ferromagnetische Rückschlussscheibe kann im Rotor selbst befestigt sein. Dabei ist eine ferromagnetische Hilfsanordnung zur Erzeugung eines magnetischen Hilfsmomentes im Zusammenwirken mit dem Rotormagneten erforderlich.

Aus der JP-A-08/214 524 kennt man einen Gerätelüfter, der durch einen kollektorlosen Gleichstrommotor angetrieben wird, welcher als Außenläufermotor ausgebildet ist. Dieser Außenläufermotor hat ein Statorteil mit einem Klauenpolstator, und einen Permanentmagnet-Rotor, der seinerseits ein Lüfterrad trägt.

Aus der US-A-5 591 017 kennt man einen Lüfter mit einem Radiallüfterrad, das direkt mit dem vierpoligen permanentmagnetischen Außenrotor eines kollektorlosen Gleichstrommotors verbunden ist. Der Innenstator hat ein Blechpaket mit vier ausgeprägten Statorpolen. Wenn der Motor stromlos ist, wird der permanentmagnetische Außenrotor durch zwei Permanentmagnete, die am Stator angeordnet sind, in eine bestimmte Stellung gezogen, aus der er sicher anlaufen kann.

Der vorliegenden Erfindung liegt die Aufgabe zugrunde, einen Kleinlüfter der gattungsgemäßen Art zu schaffen, der besonders einfach, kompakt und kostengünstig ist.

Erfindungsgemäß wird dies erreicht durch eine Kleinlüftereinheit mit den Merkmalen des Patentanspruchs 1. Bei einem Motor, der als Klauenpolmotor ausgebildet ist, wird also auf einen magnetischen Rotor-Rückschluss (Rückschlusseisen) verzichtet. Dadurch wird zwar ein etwas geringerer Wirkungsgrad erreicht, der aber für die bevorzugte Anwendung ausreicht. Was den Anlauf des Motors betrifft, so wird durch mindestens einen, bevorzugt durch zwei diametral gegenüberliegende Positioniermagnete stets eine Position des Rotors bewirkt, aus der er sicher anlaufen kann. Solche Permanentmagnete sind sehr preisgünstig. Die Wechselwirkung zwischen Hauptfeld und Positionsmagnetfeld wird durch den fehlenden Rückschluss möglich. Und durch den axialen Versatz zwischen Stator und Rotor wird, durch die Wechselwirkung zwischen dem Magnetfeld des Rotormagneten und dem ferromagnetischen Material der Klauenpole, eine axiale Rotor-Haltekraft erzeugt, die z.B. die Anwendung einer solchen Kleinlüftereinheit auch dort ermöglicht, wo wegen der geringen Größe eine axiale Sicherung der Motorwelle nur mit größtem Aufwand möglich wäre. Auf eine solche Kleinlüftereinheit dürfen deshalb auch größere Beschleunigungen einwirken, wie sie z.B. in Kraftfahrzeugen auftreten.

Dabei wird dieser Versatz bevorzugt gemäß Anspruch 2 so groß gewählt, dass der Rotor mit einer axialen Beschleunigung beaufschlagbar ist, die etwa dem vier- bis siebenfachen Wert der Erdbeschleunigung entspricht.

Der Klauenpolstator wird bevorzugt gemäß Anspruch 4 ausgebildet. Eine besonders vorteilhafte Ausgestaltung ist dabei Gegenstand des Anspruchs 5. In der Sensorwicklung werden durch den Rotormagneten rotorstellungsabhängige Signale induziert. Anhand dieser Signale wird durch eine Steuerschaltung die Arbeitswicklung einpulsig angesteuert, d.h. alternierend ein- und ausgeschaltet. Es wird somit bewusst kein magnetisches Wechselfeld erzeugt, wozu bei nur einem Wicklungsstrang eine Vollbrücken-Ansteuerung erforderlich wäre. Die Ansteuerschaltung ist dadurch außerordentlich kostengünstig; sie kostet allenfalls so viel wie ein Hall-IC.

Der erfindungsgemäße Klauenpolmotor kann im Vergleich zu einem Scheibenläufer gleicher Leistung kompakter, insbesondere mit kleinerem Außendurchmesser, ausgebildet werden.

Weitere vorteilhafte Ausgestaltungsmerkmale der Erfindung sind in den Unteransprüchen sowie der folgenden Beschreibung enthalten.

Anhand von bevorzugten, in den Zeichnungen veranschaulichten Ausführungsbeispielen soll im folgenden die Erfindung näher erläutert werden. Dabei zeigen:
- Fig. 1: einen Axialschnitt durch eine erste Ausführungsform einer erfindungsgemäßen Kleinlüftereinheit,
- Fig. 2: eine (etwas verkleinerte) Draufsicht auf die Seite einer Ansaugöffnung, in Pfeilrichtung II gemäß Fig. 1,
- Fig. 3: eine Ansicht auf die Flanschseite in Pfeilrichtung III genmäß Fig. 1,
- Fig. 4: eine Seitenansicht in Pfeilrichtung IV gemäß Fig. 1,
- Fig. 5: einen Axialschnitt durch die Stator-Ringspule,
- Fig. 6: einen entsprechenden Schnitt durch ein Klauenpolblech in zur Montage lagerichtiger Zuordnung zur Stator-Ringspule gemäß Fig. 5,
- Fig. 7: eine Ansicht der Ringspule in Pfeilrichtung VII gemäß Fig. 5,
- Fig. 8: eine Ansicht des Klauenpolbleches in Pfeilrichtung VIII gemäß Fig. 6,
- Fig. 9: einen Axialschnitt durch eine Rotor-Lüfterrad-Einheit,
- Fig. 10: eine Draufsicht in Pfeilrichtung X gemäß Fig. 9,
- Fig. 11: eine zweite Ausführungsform der erfindungsgemäßen Kleinlüftereinheit in einer Schnittdarstellung analog zu Fig. 1,
- Fig. 12: eine verkleinerte Draufsicht in Pfeilrichtung XII gemäß Fig. 11 und
- Fig. 13: eine entsprechend verkleinerte Seitenansicht in Pfeilrichtung XIII gemäß Fig. 12.

In den verschiedenen Figuren der Zeichnung sind gleiche Teile stets mit den gleichen Bezugszeichen versehen und werden daher in der Regel jeweils nur einmal beschrieben.

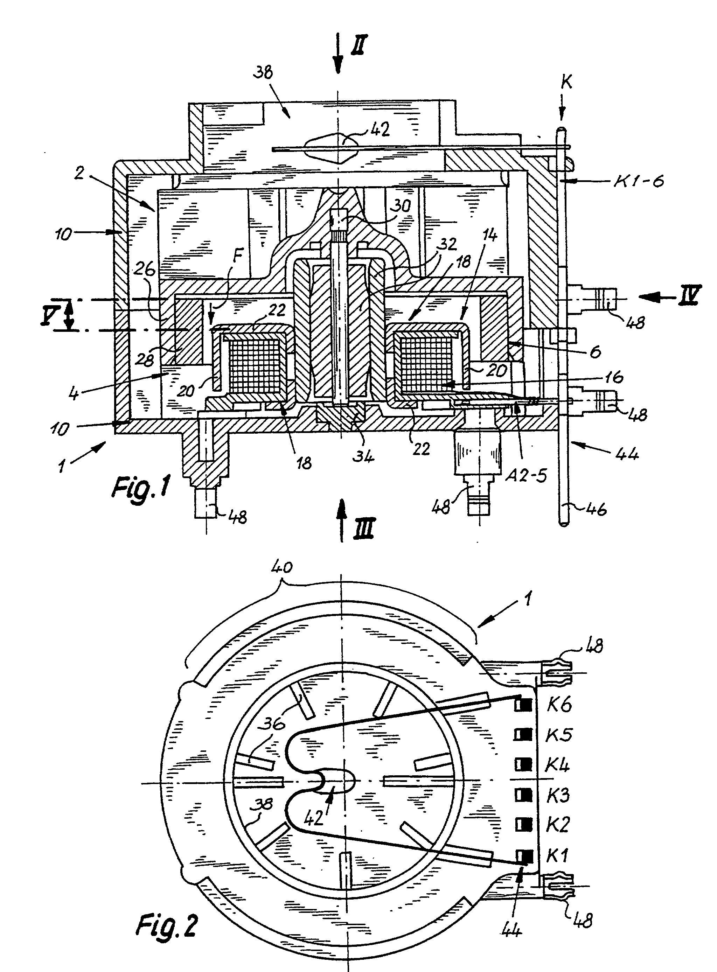

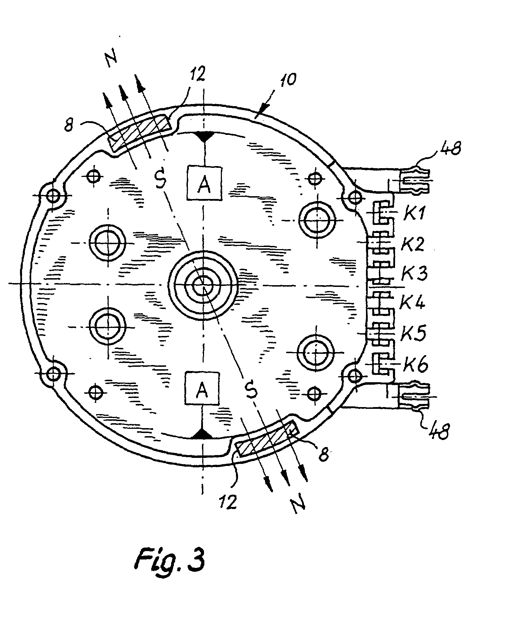

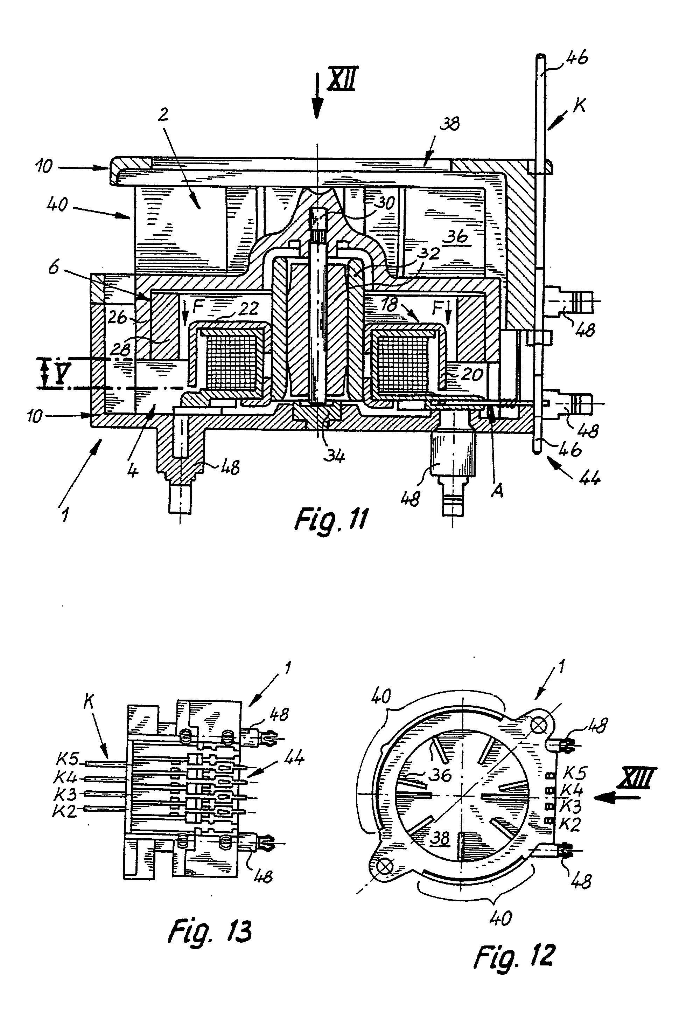

Wie sich zunächst aus Fig. 1 und 11 jeweils ergibt, weist eine erfindungsgemäße Kleinlüftereinheit 1 ein Lüfterrad 2 und einen dieses antreibenden kollektorlosen Gleichstrommotor 4 auf. Dieser Gleichstrommotor 4 ist erfindungsgemäß als einphasiger, einsträngiger Klauenpolmotor mit einem rückschlußfreien Permanentmagnet-Rotor 6 ausgebildet. Dabei sind gemäß Fig. 3 bevorzugt zwei diametral gegenüberliegende Positioniermagnete 8 vorgesehen, die im Stillstand des Gleichstrommotors 4 derart auf den Rotor 6 wirken, daß stets eine anlaufbereite Position (Anlaufposition) des Rotors 6 bewirkt wird. Die Kleinlüftereinheit 1 weist ein Gehäuse 10 auf. Die Positioniermagnete 8 sind in jeweils einer taschenartigen Aufnahme 12 des Gehäuses 10 angeordnet, so daß sie radial außerhalb des Rotors 6 etwa in dem vom Rotor 16 axial überdeckten Bereich liegen. Vorzugsweise sitzt jeder Positioniermagnet 8 recht genau in der Mitte der axialen Länge des Rotors 6. Hierdurch werden axiale Schwingungsanregungen und somit lästige Geräusche vermieden.

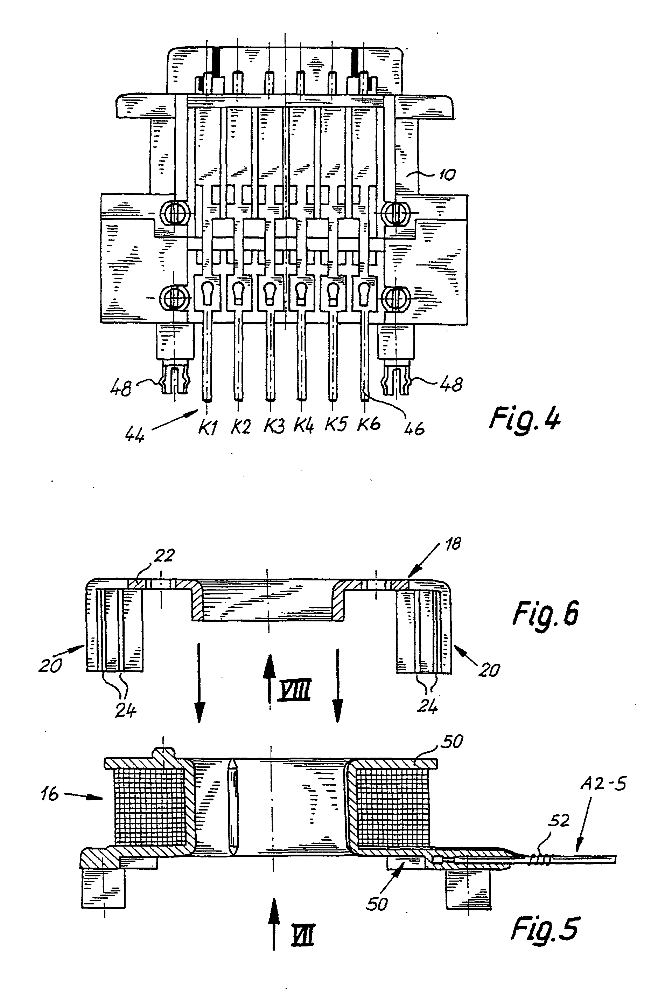

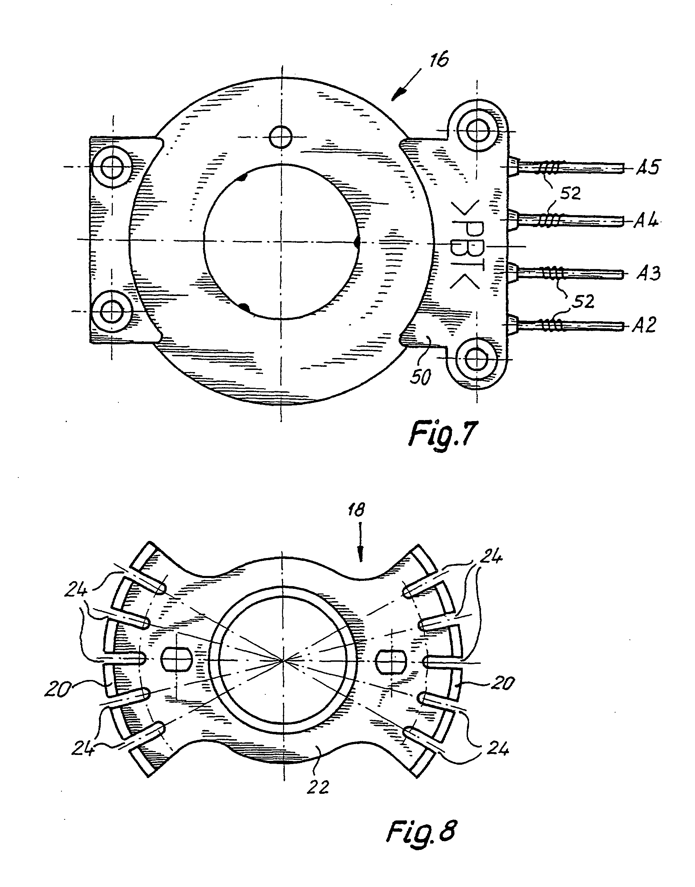

Wie sich weiterhin aus Fig. 1 sowie auch aus Fig. 5 bis 8 ergibt, weist der erfindungsgemäße Klauenpolmotor 4 einen Stator 14 mit einer koaxialen Ringspule 16 und zwei axial gegenüberliegenden Klauenpolblechen 18 auf. Gemäß Fig. 6 und 8 besitzt jedes Klauenpolblech 18 vorzugsweise zwei diametral gegenüberliegende Klauenpole 20. Jeder Klauenpol erstreckt sich ausgehend von einem ringscheibenförmigen, auf der jeweiligen Stirnseite der Ringspule 16 angeordneten Blechabschnitt 22 in axialer Richtung und weist dabei eine in Umfangsrichtung kreisbogenförmige Kontur auf, so daß jeder Klauenpol 20 radial neben der Ringspule 16 liegt und dabei nahezu die gesamte axiale Statorlänge überdeckt. Die beiden grundsätzlich identisch ausgebildeten Klauenpolbleche 18 liegen auf den axial gegenüberliegenden Stirnseiten der Ringspule 16 und sind dabei in Umfangsrichtung gegeneinander um 90° versetzt, so daß sich die Klauenpole 20 der beiden Klauenpolbleche 18 in Umfangsrichtung jeweils abwechseln. Hierdurch werden bei Stromfluß durch die Ringspule 16 in Umfangsrichtung abwechselnde magnetische Nord/Süd-Pole gebildet.

Die Ringspule 16 ist bevorzugt bifilar gewickelt, wodurch einerseits eine Arbeitswicklung und andererseits eine Sensorwicklung (Tachowicklung) gebildet sind. Hierdurch kann zur Motorsteuerung eine sehr einfache und außerordentlich kostengünstige Steuerschaltung verwendet werden (nicht im einzelnen dargestellt), die in Abhängigkeit von rotorstellungsabhängigen, induzierten Signalen der Sensorwicklung die Arbeitswicklung einpulsig ansteuert (ein- und ausschaltet).

Gemäß Fig. 6 und 8 sind vorteilhafterweise die Klauenpole 20 jeweils durch mindestens zwei, insbesondere wie dargestellt fünf, axial verlaufende Schlitze 24 unterbrochen. Anders ausgedrückt ist eine Anzahl n ≥ 2 Schlitze vorgesehen. Diese Maßnahme dient zur Reduzierung des Polruckens sowie zur Vermeidung von Wirbelstromverlusten, indem die Polflächen unterbrochen werden, in denen ansonsten Wirbelströme induziert werden könnten.

Es ist vorteilhaft, die Klauenpolbleche 18 aus einem hysteresearmen Material herzustellen. Dies kann mit einer weichmagnetischen Nickel-Eisen-Legierung mit 30 bis 80% Nickel erreicht werden. Besonders geeignet ist ein Material, welches unter der Bezeichnung "HYPERM 50" bekannt ist. Dieses Material weist besonders geringe Hysterese-Verluste (Eisenverluste) auf. Die Koerzitivfeldstärke sollte im Bereich von 4 bis 10 A/m liegen, insbesondere aber etwa 8 A/m nicht überschreiten.

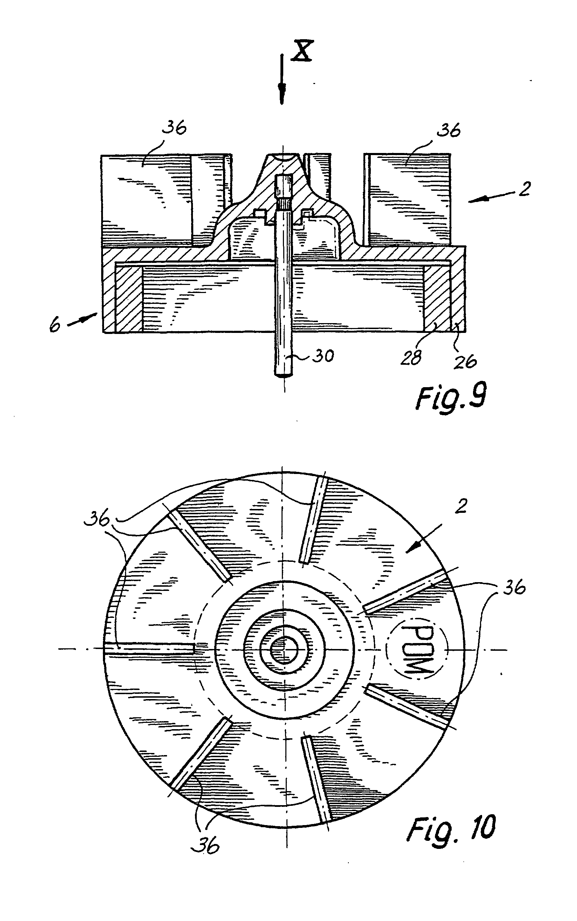

Wie sich weiterhin aus Fig. 1 und 11 jeweils ergibt, (vgl. zudem auch Fig. 9), ist der Rotor 6 prinzipiell als Außenläufer ausgebildet. Er besitzt einen etwa hohlzylindrischen Aufnahmeabschnitt 26 für einen ringförmigen, permanentmagnetischen Rotormagnet 28. Dieser Rotormagnet 28 kann mit Vorteil aus einem ursprünglich streifenförmigen, plastisch verformbaren, insbesondere kunststoffgebundenen Ferritmagnet gebildet sein, und zwar mit radialer Magnetisierung und Polzahl 4.

In der dargestellten, bevorzugten Ausführungsform - vgl. insbesondere Fig. 9 und 10 - ist der Rotor 6 bzw. der Aufnahmeabschnitt 26 für den Rotormagnet 28 einstückig mit dem Lüfterrad 2 ausgebildet, und zwar zweckmäßigerweise als Formteil aus Kunststoff. Dabei wird eine Welle 30 zentrisch eingeformt. Gemäß Fig. 1 und 11 läuft diese Welle 30 bevorzugt in einem Doppel-Gleitlager 32, wobei sich das freie, vom Rotor 6 abgekehrte Ende der Welle 30 in einem Spurlager 34 axial abstützt. Im übrigen läuft die Welle 30 ohne axiale Arretierung in dem Gleitlager 32. Die Halterung des Rotors 6 gegen Herausbewegen der Welle 30 aus dem Gleitlager 32 in die dem Spurlager 34 abgekehrte Richtung wird erfindungsgemäß ausschließlich durch magnetische Maßnahmen erreicht. Hierzu ist zwischen dem Stator 14 und dem Rotor 6 ein axialer Versatz V (in Fig. 1 und 11 jeweils eingezeichnet) gebildet, so daß im Zusammenwirken des Rotormagneten 28 mit den Klauenpolen 20 eine axiale Rotor-Haltekraft F erzeugt wird. Der axiale Versatz V ist hierbei in Abhängigkeit von den magnetischen Größen derart bemessen, daß der Rotor 6 mit einer axialen Beschleunigung a beaufschlagt wird, die etwa dem vier- bis siebenfachen, insbesondere etwa dem fünffachen Wert der Erdbeschleunigung g entspricht. Somit gilt a ≈ 5 g. Durch diese Maßnahme wird wirksam verhindert, daß der grundsätzlich ungesicherte Rotor 6 bei hoher axialer Stoßbelastung, wie sie beispielsweise in Kraftfahrzeugen oftmals auftreten kann, axial aus der Lagerung bewegt wird. Zudem werden durch diese erfindungsgemäße Maßnahme auch nur sehr geringe, unbedeutende Geräusche erzeugt. Im Gegensatz dazu würden andere Lösungen, wie beispielsweise Zusatzmagnete, aufgrund von axialen Schwingungsanregungen auf den Rotor stärkere und deutlicher hörbare Geräusche erzeugen. Im dargestellten Ausführungsbeispiel liegt der axiale Versatz V zwischen Stator 14 und Rotor 6 in der Größenordnung von etwa 40 bis 60%, insbesondere etwa 50%, der axialen Länge des Stators 14 bzw. des Rotormagneten 28.

Wie sich insbesondere aus Fig. 2, 9 und 10 ergibt, ist das Lüfterrad 2 bevorzugt als Radiallaufrad mit im wesentlichen radial angeordneten Schaufeln 36 ausgebildet. Diese Schaufeln 36 sind einstückig an einen ebenen Boden des Aufnahmeabschnittes 26 für den Rotormagnet 28 angeformt. Das Gehäuse 10 weist gemäß Fig. 1 und 2 bzw. Fig. 11 und 12 eine axiale Luft-Ansaugöffnung 38 sowie eine radiale Ausblasöffnung 40 auf. Der Auslaßwinkel der Ausblasöffnung 40 ist hierbei sehr variabel; er kann sich über nahezu den gesamten Umfang des Lüfters erstrecken, wie dies in Fig. 12 durch dickere Strichlinien angedeutet ist.

Im Falle der Ausführung nach Fig. 1 bis 4 ist im Luftströmungsbereich der Ansaugöffnung 38 ein elektrischer Temperatursensor 42 angeordnet, der insbesondere als NTC-Fühler ausgebildet sein kann. In einer bevorzugten Anwendung der erfindungsgemäßen Kleinlüftereinheit 1 bildet der Temperatursensor 42 einen Bestandteil einer Steuerschaltung für eine Klimaanlage insbesondere eines Kraftfahrzeugs.

In bevorzugter Ausgestaltung der Erfindung weist die Kleinlüftereinheit 1 eine spezielle Anschlußeinrichtung 44 zum elektrischen Anschluß des Stators 14 bzw. zum Anschluß von dessen Ringspule, d.h. der Arbeitswicklung und der Sensorwicklung, sowie vorzugsweise zum Anschluß des Temperatursensors 42 auf. Die Anschlußeinrichtung 44 weist einerseits einen Kontaktsatz K mit mehreren, wahlweise benutzbaren bzw. durch evtl. Umbiegen in eine verwendungsspezifische Anschlußposition bringbaren Kontaktelementen K1 bis K6 (Fig. 1 bis 4) bzw. K2 bis K5 (Fig. 11 bis 13) auf. Gemäß Fig. 4 verlaufen die Kontaktelemente K1 bis K6 parallel zueinander und zur Rotorachse (Welle 30). Dabei weisen die Kontaktelemente K auf der der Ansaugöffnung 38 gegenüberliegenden Flanschseite liegende Stiftenden 46 auf, die direkt in eine Leiterplatte eingelötet werden können. Diese Stiftenden 46 können vorteilhafterweise in mindestens zwei verschiedene Positionen gebogen werden, und zwar einerseits in die dargestellte, die Flanschseite achsparallel überragende Anordnung oder in eine um 90° (gemäß Fig. 1 nach rechts) umgebogene Position. Auf diese Weise kann die erfindungsgemäße Kleinlüftereinheit wahlweise in mindestens zwei verschiedenen Anordnungen direkt auf vorzugsweise einer Leiterplatte befestigt werden. Vorzugsweise sind hierzu zusätzliche Halterungen 48 vorgesehen, die in entsprechende Öffnungen z.B. einer Leiterplatte eingesetzt, insbesondere eingerastet werden können.

Die Anschlußeinrichtung 44 weist andererseits vorzugsweise vier Anschlußstifte A2 bis A5 auf, die in einem bevorzugt als Kunststoff-Formteil ausgebildeten Spulenträger 50 der Ringspule 16 des Stators 14 gehaltert sind. Wie sich insbesondere aus Fig. 7 ergibt, sind mit den Anschlußstiften A2 bis A5 Wicklungsdrahtenden 52 der beiden Ringspulen-Wicklungen elektrisch verbunden, und zwar zweckmäßigerweise durch Umwickeln und Verlöten bzw. Verschweißen. Ferner sind die Anschlußstifte A2 bis A5 mit jeweils einem der Kontaktelemente K2 bis K5 des Kontaktsatzes K verbunden, insbesondere steckverbunden. Die Anschlußstifte A2 bis A5 erstrekken sich parallel zueinander und senkrecht zur Rotorachse und zu den Kontaktelementen des Kontaktsatzes K. Die beiden äußeren Kontaktelemente K1 und K6 der Ausführungsform nach Fig. 1 bis 4 dienen zum direkten Anschluß von Anschlußdrähten des Temperatursensors 42.

Die erfindungsgemäße Kleinlüftereinheit 1 eignet sich besonders zur Verwendung als "Leiterplattenlüfter", d.h. zur direkten Anordnung auf einer Leiterplatte und damit zur Kühlung von umliegenden elektrischen bzw. elektronischen Bauteilen. Alternativ oder zusätzlich ist die Kleinlüftereinheit 1 zur Verwendung als "Sensorlüfter" in Verbindung mit Klimaanlagen-Steuerungen vorgesehen.

In einer praktisch realisierten Ausführungsform hat die erfindungsgemäße Kleinlüftereinheit 1 folgende Abmessungen, die jedoch nur als Beispiel dienen, wodurch die Erfindung keinesfalls beschränkt wird.

| | |
|---|---|
| Axiale Bauhöhe | etwa 18 bis 25 mm |
| Außendurchmesser | etwa 30 mm |
| Laufraddurchmesser | ca. 24 mm |
| Axiale Länge des Laufrades | ca. 6 mm |
| Schaufel-Inkreis | ca. 12 mm |
| Durchmesser der Ansaugöffnung | ca. 18 bis 22 mm |
| Rotor-Außendurchmesser | ca. 23 bis 25 mm |
| Rotormagnet-Dicke (radial) | ca. 1,5 bis 2,0 mm |
| Rotormagnet-Länge (axial) | ca. 4 bis 5 mm |
| Positioniermagnet | 5 x 3 x 1 mm |
| Rotormagnet aus einem gebogenen Streifen 60,5x4,5x1,8 mm | |
| Rotorwellen-Länge | 13 bis 14 mm |
| Spulenträger | Innen-ø ca. 7 bis 8 mm, Außen-ø ca. 15 mm, axiale Länge ca. 5 bis 6 mm, |
| Ringspule | 2 Wicklungen jeweils ca. 770 Windungen mit ca.140 bis 150 Ω. |

## Patentansprüche

1. Kleinlüftereinheit mit einem Lüfterrad (2) und einem zum Antrieb dieses Lüfterrades (2) dienenden kollektorlosen Gleichstrommotor (4), welcher einen Permanentmagnet-Rotor (6) und ein Statorteil mit einem Klauenpolstator (14) aufweist,
**dadurch gekennzeichnet,**
**dass** der Permanentmagnet-Rotor (6) keinen magnetischen Rückschluss aufweist,
**dass** der Gleichstrommotor (4) einphasig und einsträngig ausgebildet ist,
**dass** am Statorteil mindestens ein Positioniermagnet (8) vorgesehen ist,
welcher eine Anlaufposition des Permanentmagnet-Rotors (6) bewirkt,
und **dass** zwischen dem Klauenpolstator (14) und dem Rotor (6) ein axialer Versatz (V) zur Erzeugung einer axialen Rotor-Haltekraft (F) gebildet ist.

2. Kleinlüftereinheit nach Anspruch 1, bei welcher der axiale Versatz (V) zwischen Klauenpolstator (14) und Rotor (6) in Abhängigkeit von den magnetischen Eigenschaften derart bemessen ist, dass der Rotor (6) mit einer axialen Beschleunigung (a) beaufschlagbar ist, die dem etwa vier- bis etwa siebenfachen, insbesondere dem etwa fünffachen, Wert der Erdbeschleunigung (g) entspricht.

3. Kleinlüftereinheit nach Anspruch 1 oder 2, bei welcher der axiale Versatz (V) zwischen Klauenpolstator (14) und Rotor (6) in der Größenordnung von etwa 40 bis etwa 60 %, insbesondere etwa 50 %, der axialen Länge des Klauenpolstators (14) liegt.

4. Kleinlüftereinheit nach einem der vorhergehenden Ansprüche, bei welcher der Klauenpolstator (14) eine koaxiale Ringspule (16) und zwei axial gegenüberliegende Klauenpolbleche (18) mit jeweils insbesondere zwei Klauenpolen (20) aufweist.

5. Kleinlüftereinheit nach Anspruch 4, bei welcher die Ringspule (16) bifilar gewickelt ist und eine Arbeitswicklung und eine Sensorwicklung aufweist, wobei eine Steuerschaltung vorgesehen ist, die in Abhängigkeit von rotorstellungsabhängigen, induzierten Signalen der Sensorwicklung die Arbeitswicklung einpulsig ansteuert.

6. Kleinlüftereinheit nach Anspruch 5, bei welcher zur Verbindung mit einer außerhalb der Kleinlüftereinheit vorgesehenen Steuerschaltung Kontaktschienen (K1 bis K6) an der Kleinlüftereinheit vorgesehen sind.

7. Kleinlüftereinheit nach einem der vorhergehenden Ansprüche, bei welcher die Klauenpole (20) durch mindestens zwei - vorzugsweise jeweils vier bis sechs, insbesondere fünf - Schlitze (24) unterbrochen sind.

8. Kleinlüftereinheit nach einem der Ansprüche 4 bis 7, bei welcher die Klauenpolbleche (18) aus einem hysteresearmen Material, insbesondere einer weichferromagnetischen Nickel-Eisen-Legierung mit 30 bis 80 % Nickel, bestehen.

9. Kfeinlüftereinheit nach einem der Ansprüche 4 bis 8, bei welcher die Klauenpolbleche (18) aus einem Material mit einer Koerzitivfeldstärke im Bereich von 4 bis 10 A/m, insbesondere maximal etwa 8 A/m, ausgebildet sind.

10. Kleinlüftereinheit nach einem der vorhergehenden Ansprüche, bei welcher der Rotor (6) als Außenrotor ausgebildet ist und einen etwa hohlzylindrischen Aufnahmeabschnitt (26) für einen ringförmigen, permanentmagnetischen Rotormagneten (28) aufweist.

11. Kleinlüftereinheit nach einem der vorhergehenden Ansprüche, bei welcher der Rotormagnet (28) aus einem plastisch verformbaren und/oder kunststoffgebundenen Ferritmagnet gebildet ist.

12. Kleinlüftereinheit nach einem der vorhergehenden Ansprüche, bei welcher der Rotor (6) einstückig mit dem Lüfterrad (2) ausgebildet ist.

13. Kleinlüftereinheit nach einem der vorhergehenden Ansprüche, bei welcher das Lüfterrad (2) als Radiallaufrad mit im wesentlichen radial angeordneten Schaufeln (36) ausgebildet ist.

14. Kleinlüftereinheit nach einem der vorhergehenden Ansprüche, **gekennzeichnet durch** ein Gehäuse (10) mit einer - insbesondere axialen - Luft-Ansaugöffnung (38) und einer - insbesondere radialen - Ausblasöffnung (40).

15. Kleinlüftereinheit nach Anspruch 14, bei welcher im Luftströmungsbereich der Ansaugöffnung (38) und/oder der Ausblasöffnung (40) ein elektrischer Temperatursensor (42), insbesondere ein NTC-Fühler, angeordnet ist.

16. Kleinlüftereinheit nach Anspruch 14 oder 15, bei welcher das Lüfterrad (2) etwa gleichachsig zur Ansaugöffnung (38) und neben dieser angeordnet ist und mindestens bereichsweise radial über diese hinausragt.

17. Kleinlüftereinheit nach Anspruch 15, bei welcher zum Anschluss der Statorwicklung (16) ein Kontaktsatz (K) mit einer Mehrzahl von Kontaktelementen (K1 bis K6) vorgesehen ist,
und der elektrische Temperatursensor (42) an Kontaktelementen (K1, K6) dieses Kontaktsatzes (K) mechanisch und elektrisch befestigt ist.

18. Kleinlüftereinheit nach einem der vorhergehenden Ansprüche, bei welcher der Lüfter ein Gehäuse (10) aufweist,
und der Positioniermagnet (8) - bzw. jeder von vorzugsweise zwei diametral gegenüberliegend angeordneten Positioniermagneten (8) - in einer taschenartigen Aufnahme (12) dieses Gehäuses (10) angeordnet ist.

19. Kleinlüftereinheit nach Anspruch 18, bei welcher der bzw. jeder Positioniermagnet (8) im wesentlichen in der Mitte der axialen Erstreckung des Rotormagneten (28) angeordnet ist.

20. Kleinlüftereinheit nach einem der vorhergehenden Ansprüche, **gekennzeichnet durch** eine Anschlusseinrichtung (44) zum elektrischen Anschluss des Stators.

21. Kleinlüftereinheit nach Anspruch 20, bei welcher die Anschlusseinrichtung (44) einen Kontaktsatz (K) mit mehreren, wahlweise benutzbaren bzw. durch eventuelles Umbiegen in eine verwendungsspezifische Anschlussposition bringbaren Kontaktelementen (K1 bis K6) aufweist.

22. Kleinlüftereinheit nach Anspruch 20 oder 21, bei welcher der Klauenpolstator (14) eine Ringspule (16) mit einem Spulenträger (50) aufweist, in dem Anschlussstifte (A2 bis A5) gehaltert sind, mit welchen Wicklungsdrahtenden (52) der Ringspulen-Wicklungen elektrisch verbunden sind, wobei die Anschlussstifte (A2 bis A5) mit Kontaktelementen (K2 bis K5) eines Kontaktsatzes (K) verbunden sind, welcher als Anschlusseinrichtung (44) zum elektrischen Anschluss des Klauenpolstators (14) dient.

23. Kleinlüftereinheit nach einem der vorhergehenden Ansprüche, bei welcher der Permanentmagnet-Rotor (6) als Außenrotor ausgebildet und mit einer Welle (30) versehen ist, welche in einem am Statorteil vorgesehenen Gleitlager (32, 34) gelagert und dort durch die durch den axialen Versatz (V) erzeugte Rotor-Haltekraft (F) mit ihrem freien Ende gegen den stationären Teil eines Axial-Gleitlagers (34) in Anlage gehalten ist.

24. Verwendung einer Kleinlüftereinheit nach einem der vorhergehenden Ansprüche als Leiterplattenlüfter.

## Claims

1. Miniature fan unit with a fan wheel (2) and a commutatorless direct-current motor (4) which serves to drive this fan wheel (2) and comprises a permanent magnet rotor (6) and a stator part with a claw pole stator (14), **characterised in that** the permanent magnet rotor (6) comprises no magnetic return, **in that** the direct-current motor (4) is of single phase design with a single phase winding, **in that** the stator part is provided with at least one positioning magnet (8) which establishes a starting position for the permanent magnet rotor (6), and **in that** an axial offset (V) is formed between the claw pole stator (14) and the rotor (6) to produce an axial rotor holding force (F).

2. Miniature fan unit according to claim 1, wherein the size of the axial offset (V) between the claw pole stator (14) and the rotor (6) is chosen dependent on the magnetic properties such that the rotor (6) can be subjected to an axial acceleration (a) which is roughly four to roughly seven, in particular roughly five times the value of the acceleration due to gravity (g).

3. Miniature fan unit according to claim 1 or 2, wherein the axial offset (V) between the claw pole stator (14) and the rotor (6) is of the order of magnitude of approximately 40 to approximately 60%, in particular approximately 50% of the axial length of the claw pole stator (14).

4. Miniature fan unit according to one of the preceding claims, wherein the claw pole stator (14) comprises a coaxial annular coil (16) and two axially opposing claw pole plates (18) each with in particular two claw poles (20).

5. Miniature fan unit according to claim 4, wherein the annular coil (16) is a bi-filar winding and comprises a working winding and a sensor winding, a control circuit being provided which actuates the working winding with single pulses depending on induced sensor winding signals dependent on the rotor position.

6. Miniature fan unit according to claim 5, wherein contact rails (K1 to K6) are provided on the miniature fan unit for connection with a control circuit provided outside the miniature fan unit.

7. Miniature fan unit according to one of the preceding claims, wherein the claw poles (20) are interrupted by at least two - preferably in each case four to six, in particular five - slots (24).

8. Miniature fan unit according to one of claims 4 to 7, wherein the claw pole plates (18) are made of a low-hysteresis material, in particular a soft ferromagnetic nickel-iron alloy with 30 to 80% nickel.

9. Miniature fan unit according to one of claims 4 to 8, wherein the claw pole plates (18) are formed of a material with a coercitive field strength in the region of 4 to 10 A/m, in particular a maximum of approximately 8 A/m.

10. Miniature fan unit according to one of the preceding claims, wherein the rotor (6) is embodied as an external rotor and comprises a roughly hollow cylindrical receiving portion (26) for an annular permanently magnetic rotor magnet (28).

11. Miniature fan unit according to one of the preceding claims, wherein the rotor magnet (28) is formed of a plastically deformable and/or plastic-bound ferrite magnet.

12. Miniature fan unit according to one of the preceding claims, wherein the rotor (6) is embodied in one piece with the fan wheel (2).

13. Miniature fan unit according to one of the preceding claims, wherein the fan wheel (2) is embodied as a radial wheel with essentially radially arranged blades (36).

14. Miniature fan unit according to one of the preceding claims, **characterised by** a housing (10) with an - in particular axial - air intake opening (38) and an - in particular radial - outlet opening (40).

15. Miniature fan unit according to claim 14, wherein an electric temperature sensor (42), in particular an NTC sensor, is arranged in the air flow region of the intake opening (38) and/or the outlet opening (40).

16. Miniature fan unit according to claim 14 or 15, wherein the fan wheel (2) is arranged roughly on the same axis as the intake opening (38) and near to the latter and projects radially beyond the latter at least in areas.

17. Miniature fan unit according to claim 15, wherein a contact set (K) with a plurality of contact elements (K1 to K6) is provided for connection of the stator winding (16), and the electric temperature sensor (42) is fastened mechanically and electrically to contact elements (K1, K6) of this contact set (K).

18. Miniature fan unit according to one of the preceding claims, wherein the fan comprises a housing (10), and the positioning magnet (8) - or each of preferably two diametrically opposing positioning magnets (8) - is arranged in a pocket-like recess (12) in this housing (10).

19. Miniature fan unit according to claim 18, wherein the or each positioning magnet (8) is essentially arranged in the middle of the axial extension of the rotor magnet (28).

20. Miniature fan unit according to one of the preceding claims, **characterised by** a connecting device (44) for electrical connection of the stator.

21. Miniature fan unit according to claim 20, wherein the connecting device (44) comprises a contact set (K) with a plurality of optionally usable contact elements (K1 to K6) which can be brought into an application-specific connecting position by bending if necessary.

22. Miniature fan unit according to claim 20 or 21, wherein the claw pole stator (14) comprises an annular coil (16) with a coil carrier (50) in which connecting pins (A2 to A5) are mounted with which winding wire ends (52) of the annular coil windings are connected electrically, the connecting pins (A2 to A5) being connected with contact elements (K2 to K5) of a contact set (K) which serves as connecting device (44) for electrical connection of the claw pole stator (14).

23. Miniature fan unit according to one of the preceding claims, wherein the permanent magnet rotor (6) is embodied as an external rotor and is provided with a shaft (30) which is mounted in a friction bearing (32, 34) provided on the stator part and is held there with its free end bearing against the stationary part of an axial friction bearing (34) by the rotor holding force (F) produced by the axial offset (V).

24. Use of a miniature fan unit according to one of the preceding claims as a circuit board fan.

## Revendications

1. Ventilateur miniature, avec une roue de ventilateur (2) et avec un moteur (4) à courant continu sans collecteur, qui sert à entraîner cette roue de ventilateur (2) et qui présente un rotor (6) à aimants permanents et une partie de stator dotée d'un stator (14) à pôles à griffes,
**caractérisé en ce que** le rotor (6) à aimants permanents ne présente pas de dérivation magnétique,
**en ce que** le moteur (4) à courant continu est réalisé monophasé et à bobine unique,
**en ce qu'**au moins un aimant de positionnement (8) est prévu sur la partie de stator, aimant qui produit une position de démarrage du rotor (6) à aimants permanents,
et **en ce qu'**un décalage axial (V) est formé entre le stator (14) à pôles à griffes et le rotor (6) afin de produire une force axiale (F) de retenue du rotor.

2. Ventilateur miniature selon la revendication 1, dans lequel le décalage axial (V) entre le stator (14) à pôles à griffes et le rotor (6) est dimensionné, en fonction des propriétés magnétiques, de telle sorte que le rotor (6) peut être sollicité avec une accélération axiale (a) qui correspond à environ quatre à sept fois la valeur de l'accélération de la pesanteur, notamment à environ 5 fois.

3. Ventilateur miniature selon la revendication 1 ou 2, dans lequel le décalage axial (V) entre le stator (14) à pôles à griffes et le rotor (6) est égal à environ 40% à 60% de la longueur axiale du stator (14) à pôles à griffes, notamment à environ 50%.

4. Ventilateur miniature selon l'une quelconque des revendications précédentes, dans lequel le stator (14) à pôles à griffes présente une bobine annulaire coaxiale (16) et deux plaques polaires à griffes (18) axialement opposées, possédant chacune notamment deux pôles à griffes (20).

5. Ventilateur miniature selon la revendication 4, dans lequel la bobine annulaire (16) est à enroulement bifilaire et possède un bobinage de travail et un bobinage de détection, un circuit de commande étant prévu qui, d'après des signaux du bobinage de détection qui sont induits en fonction de la position du rotor, asservit par simple impulsion (« monopulse ») le bobinage de travail.

6. Ventilateur miniature selon la revendication 5, dans lequel des barres de contact (K1 à K6) sont prévues sur le ventilateur miniature pour la liaison avec un circuit de commande prévu en dehors du ventilateur miniature.

7. Ventilateur miniature selon l'une quelconque des revendications précédentes, dans lequel les pôles à griffes (20) sont interrompus par au moins deux fentes (24) - de préférence respectivement par quatre à six, et notamment cinq fentes -.

8. Ventilateur miniature selon l'une quelconque des revendications 4 à 7, dans lequel les plaques polaires à griffes (18) sont constituées d'un matériau à faible hystérésis, notamment d'un alliage ferromagnétique doux de nickel-fer avec 30 à 80% de nickel.

9. Ventilateur miniature selon l'une quelconque des revendications 4 à 8, dans lequel les plaques polaires à griffes (18) sont constituées d'un matériau avec une intensité de champ coercitif compris entre 4 et 10 A/m, notamment d'environ 8 A/m au maximum.

10. Ventilateur miniature selon l'une quelconque des revendications précédentes, dans lequel le rotor (6) est réalisé sous forme de rotor extérieur et présente une partie réceptrice (26) approximativement cylindrique creuse pour un aimant de rotor (28) annulaire, à aimantation permanente.

11. Ventilateur miniature selon l'une quelconque des revendications précédentes, dans lequel l'aimant de rotor (28) est constitué d'un aimant en ferrite plastiquement déformable et/ou combiné à une matière plastique.

12. Ventilateur miniature selon l'une quelconque des revendications précédentes, dans lequel le rotor (6) est réalisé d'un seul tenant avec la roue de ventilateur (2).

13. Ventilateur miniature selon l'une quelconque des revendications précédentes, dans lequel la roue de ventilateur (2) est réalisée sous forme de roue radiale avec des pales (36) disposées essentiellement radialement.

14. Ventilateur miniature selon l'une quelconque des revendications précédentes, **caractérisé par** un boîtier (10) avec une ouverture d'aspiration d'air (38) - notamment axiale - et une ouverture d'évacuation (40) - notamment radiale -.

15. Ventilateur miniature selon la revendication 14, dans lequel un capteur électrique de température (42), notamment un capteur CTN, est disposé dans la région du flux d'air de l'ouverture d'aspiration (38) et/ou de l'ouverture d'évacuation (40).

16. Ventilateur miniature selon la revendication 14 ou 15, dans lequel la roue de ventilateur (2) est disposée environ coaxialement à l'ouverture d'aspiration (38) et à côté de cette dernière, et en dépasse radialement au moins pour partie.

17. Ventilateur miniature selon la revendication 15, dans lequel un jeu de contacts (K) avec une pluralité d'éléments de contact (K1 à K6) est prévu pour le raccordement de la bobine de stator (16),
et le capteur électrique de température (42) est fixé mécaniquement et électriquement sur des éléments de contact (K1, K6) de ce jeu de contacts (K).

18. Ventilateur miniature selon l'une quelconque des revendications précédentes, dans lequel le ventilateur présente un boîtier (10),
et l'aimant de positionnement (8) - ou chacun des aimants de positionnement, de préférence au nombre de deux, qui sont disposés en étant diamétralement opposés - est disposé dans un logement (12) du genre poche de ce boîtier (10).

19. Ventilateur miniature selon la revendication 18, dans lequel le ou chaque aimant de positionnement (8) est disposé essentiellement au milieu de l'étendue axiale de l'aimant de rotor (28).

20. Ventilateur miniature selon l'une quelconque des revendications précédentes, **caractérisé par** un dispositif de raccordement (44) pour le raccordement électrique du stator.

21. Ventilateur miniature selon la revendication 20, dans lequel le dispositif de raccordement (44) présente un jeu de contacts (K) avec plusieurs éléments de contact (K1 à K6), sélectivement utilisables ou pouvant être amenés par recourbement éventuel dans une position de raccordement requise.

22. Ventilateur miniature selon la revendication 20 ou 21, dans lequel le stator (14) à pôles à griffes présente une bobine annulaire (16) avec un support de bobine (50) dans lequel sont maintenues des broches de raccordement (A2 à A5) avec lesquelles des extrémités (52) des fils des bobinages de la bobine annulaire sont reliées en conduction électrique, les broches de raccordement (A2 à A5) étant reliées à des éléments de contact (K2 à K5) d'un jeu de contacts (K) qui sert de dispositif de raccordement (44) pour le raccordement électrique du stator (14) à pôles à griffes.

23. Ventilateur miniature selon l'une quelconque des revendications précédentes, dans lequel le rotor (6) à aimants permanents est réalisé sous forme de rotor extérieur et est pourvu d'un arbre (30), qui est monté dans un palier lisse (32, 34) prévu sur la partie de stator et y est, par la force (F) de retenue du rotor produite par le décalage axial (V), maintenu en application par son extrémité libre contre la partie fixe d'un palier lisse axial (34).

24. Utilisation d'un ventilateur miniature selon l'une quelconque des revendications précédentes comme ventilateur pour circuit imprimé.
